# EUROPÄISCHE PATENTANMELDUNG

(11) **EP 3 670 999 A1**
(43) Veröffentlichungstag der Anmeldung: **24.06.2020**
(21) Anmeldenummer: 18306761.0
(22) Anmeldetag: 20.12.2018
(51) Int. Cl.: F16L 59/18, F16L 59/14, F16L 59/065, B67D 9/00

(54) **JOHNSTON-KUPPLUNG MIT VERSCHIEBEEINHEIT**

(71) Anmelder: Nexans, 92400 Courbevoie (FR)
(72) Erfinder: SCHULZ, Holger, 30165 Hannover (DE); REITER, Christian, 31157 Sarstedt (DE)
(74) Vertreter: Feray, Valérie

(57) **Zusammenfassung**

Es wird eine Steckkupplung (100) zum Verbinden zweier Kryoleitungen vorgeschlagen, die jeweils ein Innen- und ein Außenrohr aufweisen. Die Steckkupplung umfasst einen Kupplungsstecker (101) mit einem inneren Rohrstück (103) und einem äußeren Rohrstück (104) sowie eine Kupplungsdose (102) mit einem inneren Rohrstück (131) und einem äußeren Rohrstück (132). Der Außendurchmesser des äußeren Rohrstückes (104) des Kupplungssteckers kleiner ist als der Innendurchmesser des inneren Rohrstücks (131) der Kupplungsdose. Der Kupplungsstecker ist mit einer der Kryoleitungen und die Kupplungsdose mit der anderen der Kryoleitungen verbunden. Die Steckkupplung zeichnet sich dadurch aus, dass der Kupplungsstecker mit einer Linearverschiebeeinheit (126) mechanisch gekoppelt ist. Die mechanische Linearverschiebeeinheit ermöglicht es, den Kupplungsstecker zentriert in die Kupplungsdose einzustecken, ohne dass Kupplungsstecker bzw. Kupplungsdose bei dem Kupplungsvorgang aneinander schleifen. Außerdem wird ein Verfahren zum Kuppeln der Steckkupplung und eine Verladeeinrichtung vorgeschlagen.

## Beschreibung

### Gebiet

Die Erfindung betrifft eine Steckkupplung für vakuumisolierte flexible Leitungen, die auch unter dem Begriff "Johnston-Kupplung" bekannt ist. Außerdem betrifft die Erfindung ein Verfahren zum Kuppeln einer solchen Steckkupplung.

### Hintergrund

Tiefkalte Medien, die auch als kryogene Flüssigkeiten bezeichnet werden, werden häufig auf Schiffen, in Tankwaggons oder auf Tanklastwagen transportiert. Ein wichtiges Beispiel hierfür ist flüssiges Erdgas (LNG), das eine Verdampfungstemperatur von -162 °C (111 K) hat. Die Verladung wird typischerweise mit nicht-isolierten Leitungen und Kupplungen durchgeführt, die während der Verladung vereisen. Die fehlende Wärmeisolierung führt zur Verdampfung eines Teils des tiefkalten Mediums, was mit einem Energieverlust einhergeht, denn das verdampfte Medium muss an anderer Stelle mit hohem Energieaufwand wieder verflüssigt werden.

Bei der Verladung noch kälterer Medien, zum Beispiel flüssigem Wasserstoff (Verdampfungstemperatur -253 °C, 20 K) oder flüssigem Helium (Verdampfungstemperatur -269 °C, 4 K) würde an der Oberfläche von nicht-isolierten Leitungen und Kupplungen der Sauerstoff in der Umgebungsluft kondensieren, dessen Verdampfungstemperatur vergleichsweise höher ist (-183 °C; 90 K). Das ist höchst unerwünscht, weil durch flüssigen Sauerstoff eine potentielle Brandgefahr erheblich steigt.

Darüber hinaus sind für den Transport von solchen kryogenen Flüssigkeiten oder Medien auch vakuumisolierte Leitungen bekannt, die beispielsweise von der Firma Nexans hergestellt werden. Für Tank- und Verladezwecke sind die vakuumisolierten Leitungen flexibel ausgebildet und an einem Ende mit einer sogenannten Johnston-Kupplung ausgerüstet, mittels der zwei kryogene Leitungen verbindbar sind, ohne dass an der Verbindungsstelle die Wärmeisolierung verloren geht. Dadurch werden eine Vereisung der Kupplungsstelle und Verluste des kryogenen Mediums durch Verdampfung verringert.

Einfach ausgedrückt werden bei einer Johnston-Kupplung zwei doppelwandige vakuumisolierte Rohrleitungen ineinandergesteckt. Die Innendurchmesser solcher Rohrleitungen betragen typischerweise zwischen 20 mm und 150 mm. Grundsätzlich sind aber auch kleinere oder größere Innendurchmesser möglich. Das männliche Teil (innere doppelwandige Rohrleitung) wird in das weibliche Teil (äußere doppelwandige Rohrleitung) gesteckt. Man spricht auch von Kupplungsstecker und Kupplungsdose. Dadurch wird die äußere Oberfläche sehr gut zum inneren medienführenden Rohr wärmeisoliert. Hierfür müssen beide doppelwandige Rohrleitungen über eine vorbestimmte Länge ineinandergesteckt werden. Je nach Medium und gewünschter Wärmeisolierung liegen typische Rohr-in-Rohr-Längen im Bereich von 200 mm bis 600 mm. Abweichungen zu kleineren oder größeren Längen sind bei einzelnen Anwendungsfällen möglich. Bei dem Ineinanderstecken kann es vorkommen, dass der Kupplungsstecker in der Kupplungsdose schleift, wobei Kratzer entstehen können, da eine Zentrierung des Kupplungssteckers in der Kupplungsdose mittels der Flansche erst nach nahezu vollständigem Ineinanderstecken erfolgt. Das ist bei dauerhaft verlegten Leitungen, bei denen eine solche Johnston-Kupplung nur einmalig oder selten montiert wird, unproblematisch. Wird die Johnston-Kupplung jedoch bei der Verladung oder Betankung von kryogenen Flüssigkeiten verwendet, wird sie häufig gekuppelt, wodurch im Laufe der Zeit eine zunehmende Beschädigung der Johnston-Kupplung eintritt. Außerdem werden an solchen Verlade- bzw. Betankungsstellen äußere Kräfte, beispielsweise durch Eigengewicht der Leitung oder Windlast, auf die Leitung ausgeübt, die das Zusammenstecken der Kupplungsteile erschweren und eine Beschädigung begünstigen.

Hiervon ausgehend hat die vorliegende Erfindung die Aufgabe, eine Steckkupplung für Kryoleitungen zu schaffen, um eines oder mehrere der eingangs genannten Probleme zu überwinden oder zumindest zu verbessern.

### Zusammenfassung der Erfindung

Zur Lösung dieser Aufgabe schlägt die Erfindung nach einem ersten Aspekt eine Steckkupplung zum Verbinden zweier Kryoleitungen vor, die jeweils ein Innen- und ein Außenrohr aufweisen. Die Steckkupplung umfasst einen Kupplungsstecker mit einem inneren Rohrstück und einem äußeren Rohrstück sowie eine Kupplungsdose mit einem inneren Rohrstück und einem äußeren Rohrstück. Der Außendurchmesser des äußeren Rohrstückes des Kupplungssteckers ist kleiner als der Innendurchmesser des inneren Rohrstücks der Kupplungsdose. Der Kupplungsstecker ist mit einer der Kryoleitungen und die Kupplungsdose mit der anderen der Kryoleitungen verbunden. Die Steckkupplung zeichnet sich dadurch aus, dass der Kupplungsstecker mit einer Linearverschiebeeinheit mechanisch gekoppelt ist. Die mechanische lineare Verschiebeeinheit ermöglicht es, den Kupplungsstecker zentriert in die Kupplungsdose einzustecken, ohne dass Kupplungsstecker bzw. Kupplungsdose bei dem Kupplungsvorgang aneinander schleifen. Dadurch werden auch bei vielen Wiederholungen des Kupplungsvorganges Beschädigungen an der Steckkupplung vermieden.

Zweckmäßigerweise kann die Linearverschiebeeinheit mit der Kupplungsdose mechanisch verbindbar sein.

Bei einem Ausführungsbeispiel ist für diesen Zweck an der Kupplungsdose ein Befestigungsflansch angeordnet, der mit der Linearverschiebeeinheit verbindbar ist.

Vorteilhafter Weise weist bei einem weiteren Ausführungsbeispiel die Linearverschiebeeinheit einen Gegenflansch auf, der mit dem Befestigungsflansch verbindbar ist.

Bei einer vorteilhaften Weiterbildung der Steckkupplung ist der Befestigungsflansch als Zentrierflansch ausgebildet. Der Zentrierflansch kann einen Zentrieransatz aufweisen, der mit einer dazu komplementär ausgebildeten Anlauffläche an dem Gegenflansch zusammenwirkt. Wenn der Gegenflansch auf dem Zentrierflansch angebracht ist und mit Befestigungsschrauben beide Flansche verbunden sind, ist gleichzeitig eine gute Zentrierung des Kupplungssteckers auf der Kupplungsdose erreicht.

Zweckmäßigerweise umfasst die Linearverschiebeeinheit wenigstens eine oder mehrere Führungsstangen, entlang der ein Schlitten linear verfahrbar ist.

Bei einem weiteren Ausführungsbeispiel ist jede Führungsstange mit dem Gegenflansch mechanisch fest verbunden.

Bei einer Weiterbildung der Steckkupplung umfasst der Schlitten für jede Führungsstangen eine Führungsbuchse, wobei der Schlitten mit dem Kupplungsstecker fest verbunden ist. Der Schlitten sorgt auf diese Weise für eine saubere Führung des Kupplungssteckers während des Kupplungsvorganges.

Zweckmäßigerweise kann die Steckkupplung mit einer Antriebseinheit versehen sein, mittels der der Kupplungsstecker entlang der Führungsstangen verfahrbar ist. Insbesondere bei einem schweren Kupplungsstecker erleichtert die Antriebseinheit die sichere Handhabung der Steckkupplung während des Kupplungsvorganges.

Bei einem Ausführungsbeispiel der Steckkupplung ist der Zentrierflansch mittels mechanischer Ausgleichsmittel an einem an der Kupplungsdose angeordneten Flansch befestigt. Als mechanische Ausgleichsmittel kommen beispielsweise Tellerfedern infrage, die fertigungsbedingte Fluchtfehler von Flanschverbindungen ausgleichen.

Bei einer anderen Weiterbildung der Steckkupplung ist ein von dem Gegenflansch abliegendes Ende der Führungsstangen an einem Verbindungselement befestigt, das alle Führungsstangen miteinander verbindet. Das Verbindungselement ist beispielsweise eine Kreisringscheibe und verbessert die mechanische Stabilität der Linearverschiebeeinheit.

Nach einem zweiten Aspekt schlägt die Erfindung ein Verfahren zur Kupplung einer Steckkupplung nach dem ersten Aspekt der Erfindung vor. Das Verfahren umfasst die folgenden Schritte:
- Verfahren der Linearverschiebeeinheit in eine Ausgangsstellung;
- Befestigen eines an der Linearverschiebeeinheit angeordneten Flanschs auf einem Gegenflansch, der an der Kupplungsdose angeordnet ist ; und
- Einfahren des Kupplungsstecker in die Kupplungsdose mittels der Linearverschiebeeinheit.

Das erfindungsgemäße Verfahren gewährleistet einen Kupplungsvorgang, der auch bei vielfacher Wiederholung Beschädigungen an der Steckkupplung vermeidet und eine hohe Betriebssicherheit sicherstellt.

Nach einem dritten Aspekt schlägt die Erfindung eine Verladeeinrichtung für kryogene Fluide mit einer Steckkupplung gemäß dem ersten Aspekt der Erfindung vor. Die Verladeeinrichtung verwirklicht die im Zusammenhang mit der Steckkupplung beschriebenen Vorteile.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: ein Ausführungsbeispiel einer Johnston-Kupplung mit Linearverschiebeeinheit vor dem Zusammenbau der Kupplungsteile;
- Fig. 2: die Johnston-Kupplung aus Figur 1 nach dem Zusammenbau; und
- Fig. 3: ein schematisches Flussdiagramm.

Gleiche oder ähnliche Elemente sind in den Figuren mit gleichen oder ähnlichen Bezugszeichen versehen.

### Ausführungsbeispiel

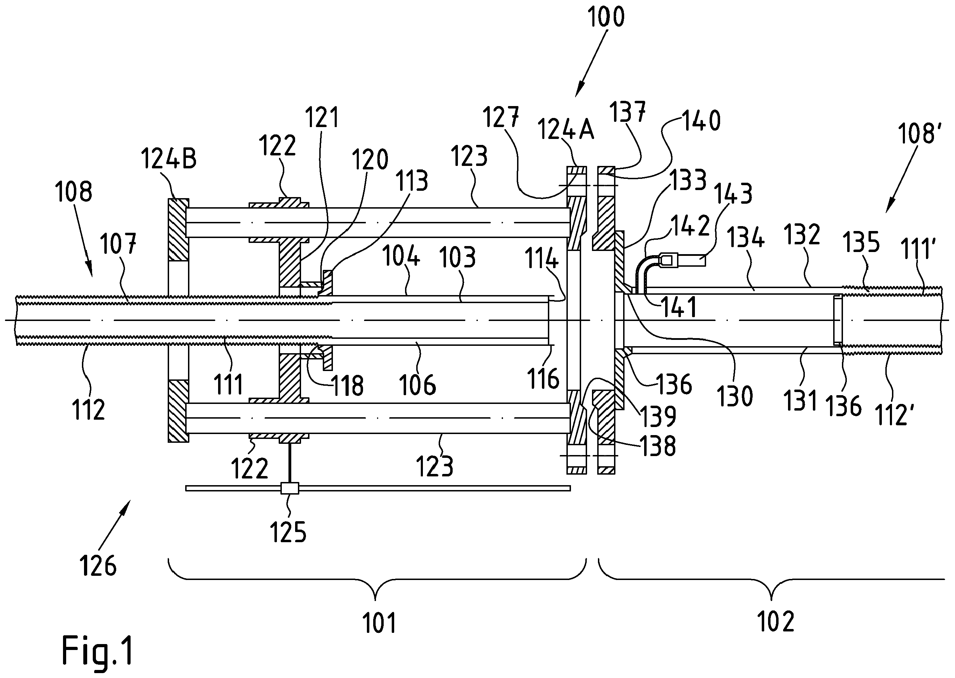

Figur 1 zeigt eine Steckkupplung, die als Ganzes mit dem Bezugszeichen 100 bezeichnet ist. Zu der Steckkupplung 100 gehören ein Kupplungsstecker 101 und eine Kupplungsdose 102, die in Figur 1 vor dem Zusammenbau mit einem kleinen Abstand voneinander dargestellt sind.

Der Kupplungsstecker 101 besteht aus einem inneren Rohrstück 103 und einem äußeren Rohrstück 104, die zwischen sich einen evakuierten Ringraum 106 einschließen, der mit dem evakuierten Ringraum 107 einer Kryoleitung 108 verbunden ist, die vereinfachend mit einem inneren und einem äußeren Wellrohr 111,112 dargestellt sind. Die Wellrohre 111,112 gewährleisten, dass die Kryoleitung 108 flexibel ist, was bei Tankvorgängen von Vorteil ist. Hierbei ist es ausreichend, wenn eine Seite der Kupplung 100 bewegbar, also mit flexiblen Leitungen ausgestattet ist. Die andere Seite der Kupplung 100 kann fest verrohrt zum Beispiel auf einem Tankwagen oder Schiff installiert sein.

Ein Flansch 113 ist mit einem Ende des äußeren Rohrstücks 104 vakuumdicht verschweißt. Die von dem Flansch 113 abliegenden Enden des inneren Rohrstücks 103 und des äußeren Rohrstücks 104 sind jeweils mit einem schematisch dargestellten Aufnahmeteil 114 vakuumdicht verschweißt. Das Aufnahmeteil 114 weist einen rohrförmigen Vorsprung 116 auf. Auf dem Vorsprung 116 ist ein Dichtring angeordnet (nicht dargestellt).

Das im Bereich des Flansches 113 befindliche Ende des inneren Rohrstücks 103 ist mit dem inneren Wellrohr 111 der Kryoleitung 108 vakuumdicht verschweißt, während an dem äußeren Wellrohr 112 der Kryoleitung 108 der Flansch 113 vakuumdicht angeschweißt ist. Zu diesem Zweck weist der Flansch 113 eine Schweißlippe 118 auf.

Bei einem nicht dargestellten Ausführungsbeispiel trägt der Flansch 113 auf der der Schweißlippe 118 gegenüberliegenden Seite eine Dichtung, die bei geschlossener Johnston-Kupplung den Ringspalt zwischen dem inneren Rohrstück 131 der Kupplungsdose 102 und dem äußeren Rohrstück 104 des Kupplungssteckers 101 abdichtet.

Auf der der Kryoleitung 108 zugewandten Seite des Flansches 113 ist außerdem ein Rohrabschnitt 120 an den Flansch 113 angeschweißt, dessen Durchmesser größer ist als der Durchmesser der Kryoleitung 108. An das andere Ende des Rohrabschnittes 120 ist eine Kreisringscheibe 121 angeschweißt, die mit mehreren Führungsbuchsen 122 verbunden ist. Die Führungsbuchsen 122 sind entlang von Führungsstangen 123 linear verschiebbar. Die Führungsstangen 123 sind parallel zueinander ausgerichtet und jeweils mit kreisringscheibenförmigen Flanschen 124A und 124B fest verbunden.

Das in Figur 1 dargestellte Ausführungsbeispiel der Steckkupplung 100 ist mit zwei Führungsstangen 123 und Führungsbuchsen 122 ausgerüstet. Aus Stabilitätsgründen sind bei anderen Ausführungsbeispielen drei oder mehr Führungsstangen 123 und Führungsbuchsen 122 vorgesehen. Die Kreisringscheibe 121 bildet gemeinsam mit den Führungsbuchsen 122 einen Schlitten, der auf den Führungsstangen 123 mittels einer schematisch dargestellten Antriebseinheit 125 linear verschiebbar ist. Die Führungsstangen 123 und die Führungsbuchsen 122 bilden mit den Flanschen 124A und 124B gemeinsam eine Linearverschiebeeinheit für den Kupplungsstecker 101. Die Linearverschiebeeinheit ist als Ganzes mit dem Bezugszeichen 126 bezeichnet. Der Flansch 124A weist Schraubenlöcher 127 für Befestigungsschrauben auf.

Bei einem Ausführungsbeispiel ist die Antriebseinheit 125 aus einer Zahnstange und einer Handkurbel gebildet (nicht dargestellt). Bei anderen Ausführungsbeispielen ist ein motorischer oder hydraulischer Antrieb vorgesehen.

Die Kupplungsdose 102 besteht ebenfalls aus einem inneren Rohrstück 131 und einem äußeren Rohrstück 132, die an einem Ende mit einem Flansch 133 vakuumdicht verschweißt sind. Der Flansch 133 weist eine Bohrung 130 auf. Der Innendurchmesser der Bohrung 130 des Flansches 133 sowie des inneren Rohrstückes 131 sind geringfügig größer als der äußere Durchmesser des äußeren Rohrstücks 104 des Kupplungssteckers 101. Die dem Flansch 133 abgewandten Enden der Rohrstücke 131 und 132 sind mit einem Innenrohr 111' bzw. einem Außenrohr 112' einer zweiten Kryoleitung 108' vakuumdicht verschweißt. Das Innenrohr 111' und das Außenrohr 112' sind wiederum als flexible Wellrohre ausgebildet, um einen Betankungsvorgang zu erleichtern. Der zwischen dem inneren Rohrstück 131 und dem äußeren Rohrstück 132 befindliche Ringraum 134 ist mit dem evakuierten Raum 135 der Kryoleitung 108' verbunden. Das in der Kupplungsdose 102 innenliegende Ende des inneren Rohrstückes 131 ist als Sitz 136 für die Dichtung ausgebildet, die auf dem rohrförmigen Vorsprung 116 angeordnet ist.

Der Flansch 133 ist mit einem Zentrierflansch 137 zusammengebaut, der mit einem kegelstumpfförmigen Zentrieransatz 138 versehen ist. Der Flansch 124A an dem Kupplungsstecker 101 weist eine Anlauffläche 139 auf, die komplementär zu dem Zentrieransatz 138 geformt ist, so dass der Flansch 124A auf dem Zentrieransatz 138 zentriert wird, wenn er an den Flansch 137 herangeführt und auf dem Flansch 137 befestigt wird. Diese Befestigung erfolgt beispielsweise mit Schrauben, die durch Schraubenlöcher 140 in dem Zentrierflansch 137 und die Schraubenlöcher 127 in dem Flansch 124A gesteckt werden.

In dem Flansch 133 ist eine Bohrung 141 angeordnet in welche ein Rohrstück 142 vakuumdicht eingeschweißt ist, an dessen Ende sich ein Sicherheitsventil 143 befindet. Insbesondere zu Beginn eines Betankungsvorganges kann es vorkommen, dass die Kupplungsteile relativ warm sind, sodass es zu einer erhöhten Verdampfung des kryogenen Mediums kommt, was zu einer entsprechenden Druckerhöhung in der Johnston-Kupplung 100 führen kann. Steigt der Druck auf unzulässige Werte an, dann öffnet das Sicherheitsventil 143 und sorgt für einen Druckausgleich, sodass Beschädigungen durch Überdruck vermieden werden. Bei vertikaler oder schräggeneigter Ausführung der Johnston-Kupplung kann auf das Sicherheitsventil verzichtet werden. Einzelheiten zu der Funktionsweise des Sicherheitsventil 143 sind in der europäischen Patentschrift EP 1 957 851 B1 offenbart.

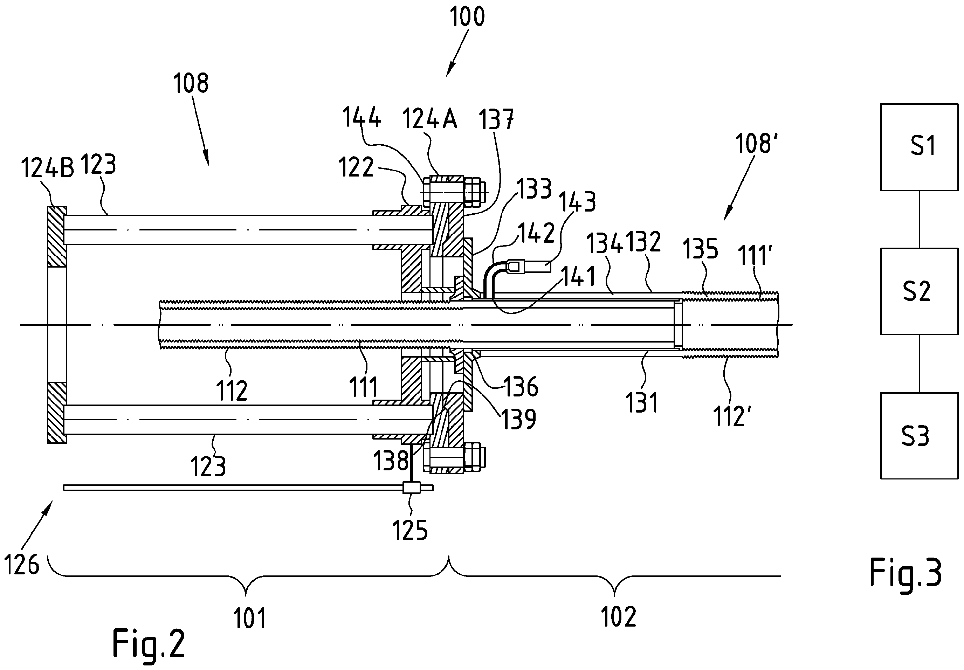

Figur 2 zeigt die Steckkupplung 100 im gekoppelten Zustand, bei dem der Schlitten der Lineareinheit 126 ganz nach rechts verschoben ist, sodass der Kupplungsstecker 101 vollständig in die Kupplungsdose 102 eingefahren ist. In dieser Position der Linearverschiebeeinheit 126 sitzt der Kupplungsstecker 101 abgedichtet in der Kupplungsdose 102. Auf diese Weise wird eine wirksame Abdichtung der Innenrohre der Kryoleitungen 108 und 108' im Bereich der Kupplung 100 erreicht, sodass im Wesentlichen kein kryogenes Medium bei einem Betankungsvorgang in die Umgebung entweicht.

Bei einem konkreten Ausführungsbeispiel der Anordnung beträgt der Innendurchmesser der Rohrleitungen 150 mm und die Rohr-in-Rohr-Länge 200 mm.

In Figur 2 sind außerdem die Schraubverbindungen zwischen dem Zentrierflansch 137 und dem Flansch 124A dargestellt. Die beiden genannten Flansche sind mittels Befestigungsschrauben 144 fest miteinander verbunden. Zwischen dem Flansch 133 und dem Zentrierflansch 137 sind Tellerfedern angeordnet (nicht dargestellt). Die Tellerfedern sind sehr steif, damit das Gewicht der Leitung 108' nicht zum "Herunterhängen" der Kupplungsdose 102 führt. Die Tellerfedern sind aber dazu geeignet, um Fluchtfehler auszugleichen, die zwischen den Flanschverbindungen 137/124B und 133/113 auftreten können.

Ein Verfahren, um die der vorgeschlagenen Johnston-Kupplung zu koppeln, ist in dem in Figur 3 dargestellten Flussdiagramm veranschaulicht. Zunächst wird in einem ersten Schritt S1 die Linearverschiebeeinheit 126 des Kupplungssteckers 101 in eine Ausgangsstellung verfahren, in der die die Führungsbuchsen 122 an der Kreisringscheibe 124B anliegen. In dieser Position befinden sich inneres und äußeres Rohrstück 103, 104 des Kupplungssteckers 101 innerhalb der Linearverschiebeeinheit 126, so dass ungewollte Berührungen insbesondere an dem äußeren Rohrstück 104 vermieden werden. Eine Beschädigung des äußeren Rohrstücks 104 ist dadurch praktisch ausgeschlossen. Dann wird in einem nächsten Schritt S2 die Kreisringscheibe 124A auf dem Zentrierflansch 137 mit den Befestigungsschrauben 144 befestigt, wodurch der Kupplungsstecker 101 auf der Kupplungsdose 102 zentriert wird. In einem Schritt S3 wird der Kupplungsstecker mittels der Linearverschiebeeinheit 126 in die Kupplungsdose 102 eingefahren, wobei das Außenrohr 104 des Kupplungssteckers 101 nicht auf dem Innenrohr 131 der Kupplungsdose schleift, weil der Kupplungsstecker 101 ausreichend genau auf der Kupplungsdose 102 zentriert ist. Die Johnston-Kupplung 100 ist nun gekuppelt.

Wenn der Kupplungsstecker 101 die in Figur 2 dargestellte Endstellung erreicht werden entsprechende Ventile betätigt, um einen Strömungsweg für das kryogene Medium durch die Johnston-Kupplung 100 zu öffnen.

Das Lösen der Johnston-Kupplung 100 nach einem Tankvorgang erfolgt durch die umgekehrte Durchführung der Verfahrensschritte, die zur Kupplung der Johnston-Kupplung durchgeführt werden.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrere Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen und Elemente vorteilhaft verwendet werden könnte.

**Bezugszeichenliste**

| | | | |
|---|---|---|---|
| 100 | Steckkupplung | 130 | Bohrung |
| 101 | Kupplungsstecker | 131 | Inneres Rohrstück |
| 102 | Kupplungsdose | 132 | Äußeres Rohrstück |
| 103 | Inneres Rohrstück | 133 | Flansch |
| 104 | äußeres Rohrstück | 134 | Evakuierter Ringraum |
| | | 135 | Evakuierter Ringraum |
| 106 | evakuierter Ringraum | 136 | Sitz |
| 107 | evakuierter Ringraum | 137 | Zentrierflansch |
| 108 | Kryoleitung | 138 | Zentrieransatz |
| | | 139 | Anlauffläche |
| | | 140 | Schraubenlöcher |
| 111 | inneres Wellrohr | 141 | Bohrung |
| 112 | äußeres Wellrohr | 142 | Rohrstück |
| 113 | Flansch | 143 | Sicherheitsventil |
| 114 | Aufnahmeteil | 144 | Befestigungsschrauben |
| 115 | Rohrabschnitt | | |
| 116 | Rohrförmiger Vorsprung | | |
| 117 | Dichtung | | |
| 118 | Schweißlippe | | |
| | | | |
| 121 | Kreisringscheibe | | |
| 122 | Führungsbuchse | | |
| 123 | Führungsstange | | |
| 124A | Flansch | | |
| 124B | Flansch | | |
| | | | |
| 126 | Antriebseinheit | | |
| 127 | Schraubenlöcher | | |

## Patentansprüche

1. Steckkupplung zum Verbinden zweier Kryoleitungen, die jeweils ein Innen- und ein Außenrohr aufweisen, wobei die Steckkupplung einen Kupplungsstecker (101) mit einem inneren Rohrstück (103) und einem äußeren Rohrstück (104) sowie eine Kupplungsdose (102) mit einem inneren Rohrstück (131) und einem äußeren Rohrstück (132) umfasst, wobei der Außendurchmesser des äußeren Rohrstückes (104) des Kupplungssteckers (101) kleiner ist als der Innendurchmesser des inneren Rohrstücks (131) der Kupplungsdose (102), wobei der Kupplungsstecker mit einer der Kryoleitungen (108) und die Kupplungsdose mit der anderen der Kryoleitungen (108') verbunden ist, **dadurch gekennzeichnet, dass** der Kupplungsstecker (101) mit einer Linearverschiebeeinheit (126) mechanisch gekoppelt ist.

2. Steckkupplung nach Anspruch 1, **dadurch gekennzeichnet, dass** die Linearverschiebeeinheit (126) mit der Kupplungsdose (102) mechanisch verbindbar ist.

3. Steckkupplung nach Anspruch 1 oder 2, **dadurch gekennzeichnet, dass** an der Kupplungsdose (102) ein Befestigungsflansch (137) angeordnet ist, der mit der Linearverschiebeeinheit (126) verbindbar ist.

4. Steckkupplung nach einem der vorstehenden Ansprüche, **dadurch gekennzeichnet, dass** die Linearverschiebeeinheit einen Gegenflansch (124A) aufweist, der mit dem Befestigungsflansch (137) verbindbar ist.

5. Steckkupplung nach einem der vorstehenden Ansprüche, **dadurch gekennzeichnet, dass** der Befestigungsflansch (137) als Zentrierflansch ausgebildet ist.

6. Steckkupplung nach einem der vorstehenden Ansprüche, **dadurch gekennzeichnet, dass** der Zentrierflansch (137) einen Zentrieransatz (138) aufweist, der mit einer dazu komplementär ausgebildeten Anlauffläche (139) an dem Gegenflansch (124A) zusammenwirkt.

7. Steckkupplung nach einem der vorstehenden Ansprüche, **dadurch gekennzeichnet, dass** die Linearverschiebeeinheit wenigstens eine oder mehrere Führungsstangen (123) umfasst, entlang der ein Schlitten (121,122) linear verfahrbar ist.

8. Steckkupplung nach einem der vorstehenden Ansprüche, **dadurch gekennzeichnet, dass** jede Führungsstange (123) mit dem Gegenflansch (124A) mechanisch fest verbunden ist.

9. Steckkupplung nach Anspruch 7, **dadurch gekennzeichnet, dass** der Schlitten (121,122) für jede Führungsstangen (123) eine Führungsbuchse (122) umfasst, wobei der Schlitten mit dem Kupplungsstecker (101) fest verbunden ist.

10. Steckkupplung nach einem der vorstehenden Ansprüche, **dadurch gekennzeichnet, dass** eine Antriebseinheit (125) vorgesehen ist, mittels der der Kupplungsstecker (101) entlang der Führungsstangen (123) verfahrbar ist.

11. Steckkupplung nach einem der vorstehenden Ansprüche, **dadurch gekennzeichnet, dass** der Zentrierflansch (137) mittels mechanischer Ausgleichsmittel an einem an der Kupplungsdose angeordneten Flansch (133) befestigt ist.

12. Steckkupplung nach einem der vorstehenden Ansprüche, **dadurch gekennzeichnet, dass** ein von dem Gegenflansch abliegendes Ende der Führungsstange(n) (123) an einem Verbindungselement (124B) befestigt sind, das alle Führungsstangen (123) miteinander verbindet.

13. Verfahren zur Kupplung einer Steckkupplung nach einem der vorstehenden Ansprüche, wobei das Verfahren folgende Schritte umfasst:
- Verfahren der Linearverschiebeeinheit (126) in eine Ausgangsstellung;
- Befestigen eines an der Linearverschiebeeinheit (126) angeordneten Flanschs (124A) auf einem Gegenflansch (137), der an der Kupplungsdose (102) angeordnet ist; und
- Einfahren des Kupplungssteckers (101) in die Kupplungsdose (102) mittels der Linearverschiebeeinheit.

14. Verladeeinrichtung für kryogene Fluide mit einer Steckkupplung (100) nach einem der Ansprüche 1 bis 12.
